# EUROPEAN PATENT SPECIFICATION

(11) **EP 3 418 193 B1**
(45) Date of publication and mention of the grant of the patent: **28.10.2020**
(21) Application number: 17752682.9
(22) Date of filing: 16.02.2017
(51) Int. Cl.: B64C 39/00, B64C 39/06

(54) **AIRCRAFT**
LUFTFAHRZEUG
AÉRONEF

(30) Priority: 16.02.2016 CN 201610086791
(43) Date of publication of application: 26.12.2018
(73) Proprietor: Shandong Natergy Energy Technology Co., Ltd., Zibo, Shandong 255088 (CN)
(72) Inventor: LIU, Angfeng, Zibo Shandong 255088 (CN)
(74) Representative: Boult Wade Tennant LLP
(86) International application number: PCT/CN2017/073757
(87) International publication number: WO 2017/140250

(56) References cited:
- WO-A1-2012/078122
- CN-A- 1 300 698
- CN-A- 102 774 495
- CN-A- 103 158 872
- CN-A- 104 648 671
- CN-Y- 2 910 796
- CN-Y- 2 910 796
- DE-A1-102007 004 746
- US-A- 5 673 872
- US-A1- 2011 101 155
- US-A1- 2011 101 155

## Description

### Technical Field

The present invention relates to the field of aerospace and marine navigation technologies, and in particular to a novel navigator.

### Background

The traditional aerospace vehicles, either airplanes or rockets, are driven by the hydrodynamic force or the reaction force of air or fuel gas. The traditional marine vessels (e.g., ship, submarine, etc.) are driven by the hydrodynamic force or the reaction force of water. This driving mode indispensably requires generating an air flow or a liquid flow with a strong back-blowing force, and then uses the hydrodynamic force or the reaction force to raise, move or suspend an aerospace vehicle or a marine vessel. This determines that the launch and navigation of such aerospace vehicle or marine vessel must rely on the air flow or the liquid flow, which requires an open fluid space and large-size fins, so as to generate a sufficient reaction force to realize the movement of the aerospace vehicle or the marine vessel.

The existing driving mode of the aerospace vehicle/marine vessel cannot meet the requirements such as low air/water flow disturbance, finless, noiseless, high security, while having both the aerospace and marine navigating functions.

CN102774495A discloses an elevating-force thruster which comprises a narrow sealed space, a power producer fixed on a frame and a torque-balance device and so on, wherein the narrow sealed space is formed by the steps of buckling a rotating disk above a fixed disk at the bottom of a sealed container and arranging a disk flange seal and a shaft seal between the rotating disk and the fixed disk. When the elevating-force thruster operates, the rotating disk located in the sealed container rotates at a high speed. The fixed disk, namely the sealed container body, is not rotated. Meanwhile, a vacuum pump and a vacuum generating device vacuumize the sealed space below the rotating disk into a space where the pressure is lower than the pressure in the sealed container. Under the action of the pressure in the sealed container, the elevating-force thrust generates an upward elevating force. The elevating force is in direct proportion with the area and the rotating speed of the rotating disk as well as the pressure difference between the sealed space below the rotary disk and the sealed container. The thruster can be applied to aircraft to realize the atmospheric flight and the outer space flight.

CN104648671A discloses a manned flying saucer. The manned flying saucer comprises an electric automatic control system, a first-grade vacuum chamber and a second-grade vacuum chamber. A solar cell panel is installed on the top of the first-grade vacuum chamber; the second-grade vacuum chamber is arranged outside the first-grade vacuum chamber; a direct-current motor system is mounted on the bottom of the first-grade vacuum chamber and comprises a main engine rotor and stators locating at both sides of the main engine rotor; a storage battery pack is arranged around the direct-current motor system; a personnel cabin and a magazine are arranged at the periphery of the direct-current motor system; an auxiliary engine is arranged at the bottom of the second-grade vacuum chamber; air suction windows are arranged along the outer edge of the manned flying saucer; an atmospheric pressure highly-sensitive sensor is arranged at the lower end of the second-grade vacuum chamber and between the personnel cabin and the magazine; and a vertical-lift air suction window is arranged at the connection place of the second-grade vacuum chamber and the first-grade vacuum chamber. The manned flying saucer provided by the invention takes off and lands steadily, can stay in air for a long time and fly at a fast speed, is exempt from interference of electric waves and influence of road and weather conditions, is safe in flight, occupies a small area when landing and is especially applicable to aerial surveillance, command and urgent repair in the industries like the power supply industry, traffic and marine accident rescue, anti-terrorism and antiriot action and police enforcement.

WO2012/078122A1 relates to transport means in fluids. The method for producing traction consists in that a circulating fluid is sucked into the region below a dome-shaped body of a device for producing traction through an upper opening with the aid of a suction device. The suction device is in the form of disks arranged at a distance from one another and is arranged on one axis with the dome-shaped body. Some of the flow throughput of a disk-shaped impeller flows out of the body through an annular gap in the device and forms a resultant excess pressure on the surfaces of the body. A cross-vortex is formed in the fluid in the upper inner portion of the shell of the dome. To this end, the dome-shaped body is in the form of a rigid convex shell in the form of an ellipsoid of revolution, while the lateral surface of said dome-shaped body forms an annular blade. The invention makes it possible to produce a tractive force directed upwards along the axis of the device, thereby increasing the efficiency of the device and reducing energy consumption.

US2011/101155A1 discloses a torque production vehicle. The vehicle includes a plenum body having a wall with a central port and a radial port formed within the wall, an impeller disposed within the plenum body to move air through the central port, an engine coupled to the impeller to rotate the impeller about an axis, at least one arm coupled to the plenum body, and a plurality of foils disposed in the radial port to direct air about the plenum body to provide a torque force about the plenum body.

DE102007004746A1 discloses a closed drive system for vehicles. The closed drive system for vehicles based on aerodynamic buoyancy is characterized by a buoyancy system with aerodynamic Float, such B. Wings and the generated flow of a gas, for example. Air in the lift channel, whereby on the leaf is generated and the compaction system for a buoyancy force according to Bernoulli flow production, consisting of pressure generator and cut resistant and the lines between buoyancy system and compaction system, thereby forming a closed flow loop is made. The a method of controlling a vehicle by controlling the buoyancy force in the buoyancy system are characterized by means of rudders, flaps and valves. The propulsion system within the hydrosphere the vehicle moved, atmosphere or in space and is controllable at aircraft movements, e.g. as a known helicopter.

CN2910796Y discloses a utility model. The utility model relates to a rotating pressure-decreasing flight vehicle belonging to electromechanical products, which comprises a rotating casing, a fixed casing, a vacuum eduction pipe, a sealing ring, an electromotor stator, an electromotor rotor, a frequency-conversion electric-control cabinet, an AC generator, a vacuum pump, an engine, a control bridge and a landing gear, wherein, the rotating casing is connected with the fixed casing through the sealing ring to form a vacuum cavity; one end of the vacuum eduction pipe passes through the fixed casing to communicate with the vacuum cavity, while the other end is connected with the vacuum pump; the engine and the AC generator are respectively connected with the vacuum pump; the AC generator, the electromotor stator and the electromotor rotor are respectively connected with the frequency-conversion electric-control cabinet; a control bridge is arranged inside the flight vehicle, and a landing gear is arranged outside the flight vehicle. The utility model has the advantages of simple structure, big carrying capacity, saving energy, being capable of vertical lifting with high practicability.

### Summary

In order to solve the above problems, the embodiments of the present invention provide a novel navigator, which utilizes a centrifugal force generated by a high-speed rotating object relative to a star (e.g., the earth) to produce a lifting force and a free movement, and has the advantages of quiet, safe, frictionless, extensive uses, etc.

One aspect of the present invention is defined in claim 1., which provides a navigator that may comprise a gyro flying device and a cover that seals and encloses the gyro flying device. The gyro flying device is connected to the cover by a retaining mechanism.

In one embodiment, the navigator may further comprise a vacuum maintaining system connected to the cover to maintain an interior of the cover in a vacuum state.

In one embodiment, the retaining mechanism may be connected to the gyro flying device through a bearing.

In one embodiment, the retaining mechanism may comprise a plurality of telescopic adjustment levers to achieve an adjustment of the inclination angle of the gyro flying device.

In one embodiment, the navigator may comprise two of the gyro flying devices arranged in upper and lower directions.

In one embodiment, the navigator may comprise three of the gyro flying devices arranged into an equilateral triangle.

In one embodiment, the driving mechanism may be an electric motor.

In one embodiment, the gyrorotor may have a cross-section structure with a thickness gradually decreased from a center to an edge.

In one embodiment, the gyrorotor may be made of a fiber material mainly composed of carbon.

According to the embodiments of the present invention, the navigator may utilize the centrifugal force of the rotating gyrorotor relative to a star to obtain the flying force, thereby achieving the advantages of quiet, safe, frictionless, extensive uses, etc.

### Brief Description of Drawings

The above and other advantages of the present invention will be easily understood when reading the following detailed descriptions with reference to the drawings. The drawings are shown for illustrative purposes only, rather than limitations to the present invention, wherein,
Fig. 1 is a schematic diagram illustrating a decomposition of the gravity center of an obj ect;
Figs. 2 to 4 are structural schematic diagrams of a navigator according to an embodiment of the present invention;
Fig. 5 is a structural schematic diagram of a navigator according to another embodiment of the present invention; and
Fig. 6 is a plan schematic diagram of a navigator according to still another embodiment of the present invention.

### Reference numerals:

- 1000:: navigator
- 1110:: gyrorotor
- 1120:: driving mechanism
- 1130:: cover
- 1140:: retaining mechanism
- 1150:: bearing
- 1160:: vacuum-pumping system

### Description of Embodiments

Next, the embodiments of the present invention will be described with reference to the drawings. Throughout the drawings, the similar reference numerals always refer to the same or similar parts/components.

To be noted, although the following description takes the "earth" as an example, the present invention is not limited thereto. The technical solutions of the present invention are also adaptive to other gravitational stars. In addition, the navigator of the present invention can navigate in either different fluid medium (e.g., air, water, etc.) or the vacuum.

Firstly, the basic principle of the present invention is introduced.

The inventor finds that when a mass point moves in a horizontal direction (including a curved movement and a linear movement on a horizontal plane), due to the continuous gravitation, actually, any moment of the horizontal movement of the mass point is also a moment constituting a circular movement around the earth made by its centering on the earth center, and a centrifugal force away from the earth center (i.e., opposite to the direction of the gravitation) is also generated; the magnitude of the moving speed of the mass point in the horizontal direction determines the magnitude of the centrifugal force of the mass point away from the earth center.

For example, when a gyro rotates around its central axis on the horizontal plane, on one hand, an arbitrary part (mass point) on the gyro is in a circular movement around the central axis of the gyro, thereby generating a centrifugal force relative to the central axis; on the other hand, at any moment, the arbitrary part (mass point) is also actually in a circular movement on an orbit around the earth in its own moving direction, thereby generating a centrifugal force away from the earth center; due to the centripetal force from the central axis of the gyro, the mass point has its moving direction changed at the next moment to enter a new circular orbit around the earth; while the change of the moving direction of the mass point does not influence the effect of the continuous generation of the centrifugal force away from the earth center by the continuously moving mass point.

When the rotation speed of the gyro is low, the centrifugal forces away from the earth center generated by various parts of the gyro will partially offset the weight of the gyro itself caused by the gravitation, so that the rotating gyro will be weightless.

As the rotation speed of the gyro increases, the centrifugal forces away from the earth center generated by various parts of the gyro increase, and when a sum (integration) of those centrifugal forces is greater than the weight of the gyro itself caused by the gravitation, the gyro as a whole will be lifted away from the ground.

The inventor also finds that when the rotating gyro is lifted and its spin plane is inclined relative to the horizontal plane, the gyro will make a lateral movement. The detailed explanation is as given follows.

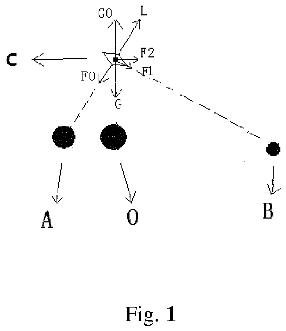

As illustrated in Fig. 1, a gravity center O of the earth can be regarded as an attraction force center of the earth, and a magnitude of an attraction force(gravity) of the earth applied to a gravity center C of the rotating gyro is G The earth can be arbitrarily divided into two parts of different sizes, each having an independent gravity center. These two independent gravity centers can be regarded as two component gravity centers A and B of the earth, and can also be called as two component attraction force centers of the earth. When the rotating gyro is lifted and its spin plane is inclined relative to the horizontal plane, the gravity center C of the rotating gyro can be regarded as being attracted by the two component attraction force centers of the earth perpendicular to each other, wherein one of the component attraction force centers of the earth attracts the gravity center C of the rotating gyro from a direction of the rotation axis and its magnitude is denoted as F0, while the other component attraction force center attracts the gravity center C of the gyro via an outer lowest point of the inclined spin plane and its magnitude is denoted as F1. The directions of the two component attraction forces are perpendicular to each other, and a magnitude of a resultant force thereof is exactly equal to the weight G of the rotating gyro itself. When rotating at a high speed, the gyro generates a lifting force L in the direction of the rotation axis with a magnitude that can overcome the component attraction force F0 of the earth center, and rises in the axial direction that is an oblique upward direction relative to the earth plane; meanwhile, the force F1 applied on the rotating gyro by the other component attraction force center of the earth only achieves an obliquely downward pulling effect, and a resultant force of F0, F1 and L can produce a vertically upward pulling force GO and a lateral moving force F2, wherein the magnitude of GO can overcome the weight G to ensure the rise or fall of the gyro, and the magnitude of F2 can ensure an acceleration or a lateral resistance to be overcome of the high-speed rotating gyro for the lateral movement; the compositions of the magnitudes and the directions of the two forces lead to different moving modes (transverse horizontal, transverse upward and transverse downward) of the high-speed rotating gyro, and the movement of the rotating gyro can be flexibly controlled according to the parameters such as a vertical inclination angle, a horizontal inclination direction and a rotation speed of the rotating gyro, etc.

According to the above findings, the inventor has invented a navigator which rises based on a rotation of a gyro around its central axis. Specifically, when the average rotation linear speed of the gyro reaches a first cosmic velocity, the entire gyro will generate a centrifugal force that overcomes its own weight and then escapes from the gravitation. As the rotation speed of the gyro further increases, the centrifugal force generated will drive the entire navigator to rise.

After the navigator rised, the horizontal moving direction of the gyro can be controlled by adjusting the inclination angle of the central axis of the gyro. For example, if the navigator is hoped to fly rightwards, the central axis of the gyro may be controlled to incline to the right in a clockwise direction; on the contrary, if the navigator is hoped to fly leftwards, the central axis of the gyro may be controlled to incline to the left in a counterclockwise direction. In conclusion, regardless of the direction in which the navigator is hoped to fly, the inclination angle of the central axis of the gyro may be controlled so that an upper end thereof inclines to the desired flying direction while a lower end thereof inclines to an opposite direction.

Next, the embodiments of the navigator of the present invention will be described with reference to the drawings.

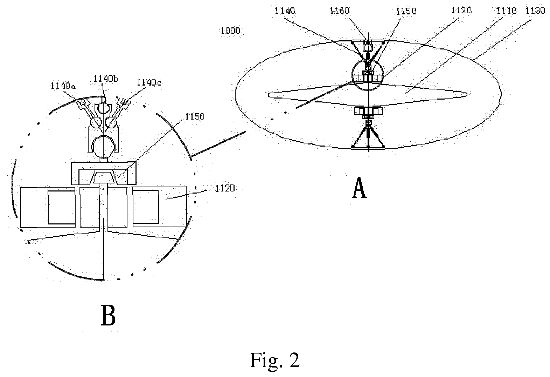

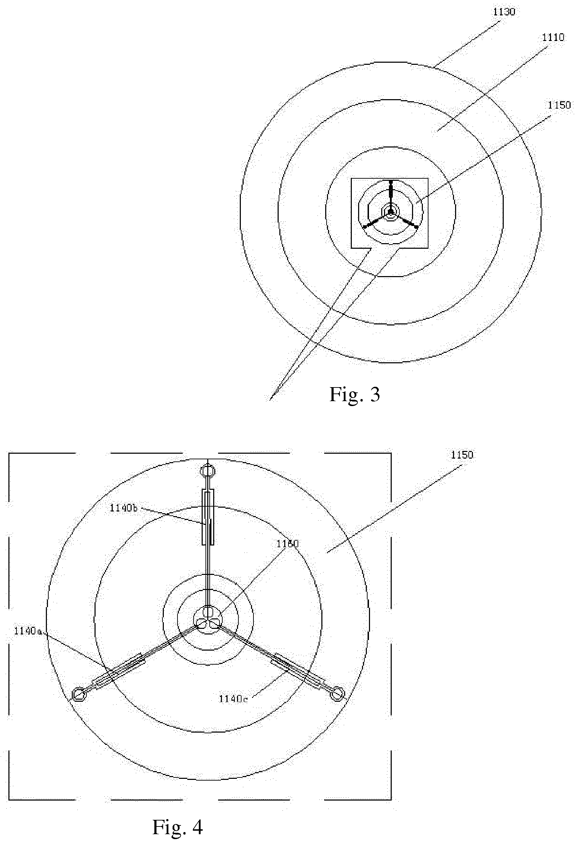

Figs. 2 to 4 illustrate structural schematic diagrams of a navigator 1000 according to an embodiment of the present invention.

As illustrated in part A of Fig. 2, the navigator 1000 comprises a gyrorotor 1110, and a driving mechanism 1120 coaxially mounted therewith (a symmetrical structure on an upper side and a lower side is shown in Fig. 2, but it is not limited thereto, and for example, it may be mounted only on one of the upper side and the lower side). The gyrorotor 1110 has an axisymmetric structure and can be rotated around its central axis. The driving mechanism 1120 may drive the gyrorotor 1110 to rotate around its central axis, thereby generating a centrifugal force relative to a star (e.g., the earth). Thus, the gyrorotor 1110 and the driving mechanism 1120 constitute a "gyro flying device" to control the rise and fall of the navigator 1000.

The driving mechanism 1120 may be for example an electric motor.

The navigator 1000 further comprises a cover 1130 that seals and encloses the gyro flying device composed of the gyrorotor 1110 and the driving mechanism 1120.

The navigator 1000 further comprises a retaining mechanism 1140. For example, as illustrated, the retaining mechanism 1140 is longitudinally symmetrical along the central axis of the gyrorotor 1110. The gyro flying device composed of the gyrorotor 1110 and the driving mechanism 1120 is connected to the cover 1130 through the retaining mechanism 1140.

The retaining mechanism 1140 may be connected to the gyro flying device through a bearing 1150. For example, in this embodiment, the retaining mechanism 1140 is connected to the driving mechanism 1120 through the bearing 1150.

Part B of Fig. 2, Fig. 3 and Fig. 4 illustrate schematic structures of the retaining mechanism 1140 and the bearing 1150 and the schematic connection relationships therebetween, respectively, in forms of an axial side view and a plan view.

For example, as illustrated, the retaining mechanism 1140 may comprise for example, but not limited to, three telescopic adjustment levers 1140a, 1140b and 1140c. Thus, through the telescopic movement of the telescopic adjustment levers 1140a, 1140b and 1140c driven by an actuating mechanism (not shown), the retaining mechanism 1140 can adjust the inclination angle of the gyro flying device, so that the navigator 1000 flies towards an inclination direction of the gyro flying device (a direction pointed by an upper end of the central axis). As the inclination angle of the gyro flying device increases, the lateral flight force of the navigator 1000 increases, and correspondingly the lifting force decreases.

When the driving mechanism 1120 drives the gyrorotor 1110 to rotate, the gyrorotor 1110 generates a centrifugal force relative to a star (e.g., the earth). As the rotation speed of the gyrorotor 1110 increases, the centrifugal force generated relative to the star increases. When the rotation speed of the gyrorotor 1110 reaches a certain value, the centrifugal force generated by the gyrorotor 1110 relative to the star may be equal to the overall weight of the navigator 1000 (and other loads). As the rotation speed of the gyrorotor 1110 further increases, the centrifugal force generated by the gyrorotor 1110 relative to the star may be greater than the overall weight of the navigator 1000 (and other loads), thereby causing the navigator 1000 to rise. When the rotation speed of the gyrorotor 1110 decreases so that the centrifugal force generated by the gyrorotor 1110 relative to the star is less than the overall weight of the navigator 1000 (and other loads), the navigator 1000 may fall.

The navigator 1000 may further comprise a vacuum maintaining system 1160 connected to the cover 1130 for maintaining an interior of the cover 1130 in a vacuum state, so as to overcome the frictional resistance encountered by the gyrorotor 1110 during rotation.

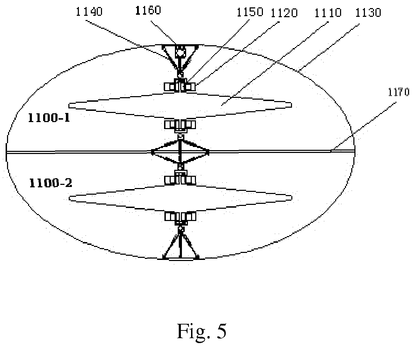

Fig. 5 illustrates a structural schematic diagram of a navigator 2000 according to another embodiment of the present invention.

Being different from the navigator 1000 as illustrated in Figs. 2 to 4, the navigator2000 as illustrated in Fig. 5 comprises two gyro flying devices 1100-1 and 1100-2 arranged in upper and lower directions, as well as associated retaining mechanisms 1140 and bearings 1150. The retaining mechanisms 1140 of the upper gyro flying device1100-1 and the lower gyro flying device 1100-2 are connected via a support structure 1170 that is connected to the cover 1130.

Thus, during operations, the two gyrorotors rotate in opposite directions at the same rotation speed, so that the changes of their angular momentums cancel out each other.

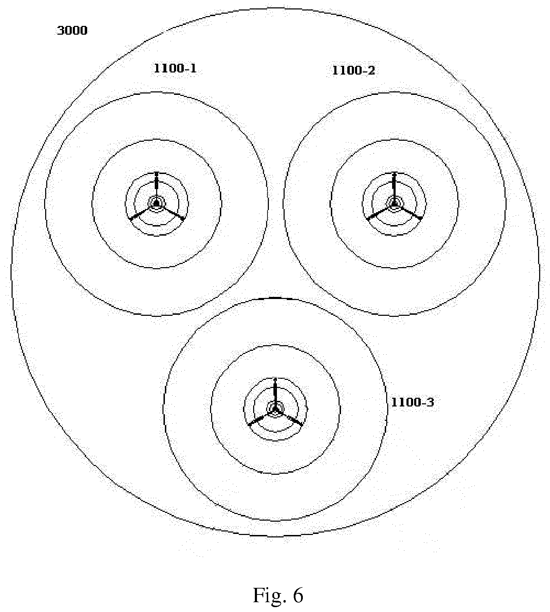

Fig. 5 illustrates a plan schematic diagram of a navigator 3000 according to still another embodiment of the present invention. As illustrated in Fig. 6, the cover 1130 is provided therein with three gyro flying devices 1100-1, 1100-2 and 1100-3, as well as respective associated retaining mechanisms 1140 and bearings 1150.

As illustrated in the figure, the three gyro flying devices 1100-1, 1100-2 and 1100-3 are horizontally arranged to form an equilateral triangle. Since the three gyrorotors are arranged horizontally, they are not coaxial and there is no uniform axis. As long as the three gyrorotors are arranged into an equilateral triangle and rotating at the same angular momentum and direction, the three gyrorotors as a whole have no rotation angular momentum, and the changes of the internal angular momentums cancel out each other, so that the whole is stable, and no instability caused by the imbalance of angular momentum will occur to the entire navigator.

Similarly, more than three gyro flying devices may also be mounted in the cover 1130.

In addition, although not specifically described, both the navigator 2000 as illustrated in Fig. 5 and the navigator 3000 as illustrated in Fig. 6 comprise a vacuum maintaining system 1160 mounted in the cover 1130.

Next, the composition of the gyrorotor 1110 is described through an example.

For example, the gyrorotor 1110 may be made of a material with a high tensile strength and a low weight (e.g., a carbon fiber series material).

In order to disperse the internal stress of the gyrorotor 1110, the gyrorotor 1110 may be manufactured to a structure with a thickness gradually decreased from a center to an edge, so as to avoid the gyrorotor 1110 from being disintegrated under a strong centrifugal pulling force generated during high-speed rotation. The cross-section structure of the gyrorotor 1110 may have an angle for example, but not limited to, from 20 to 60 degrees at the edge. The gyrorotor of the present invention may be designed as any suitable revolving object with a suitable size according to the characteristic parameters of the materials used.

The above descriptions are just specific embodiments of the present invention, rather than limitations to the implementation scope of the present invention. The invention is defined by the appended claims.

## Claims

1. A navigator (1000) comprising a gyro flying device and a cover (1130) that seals and encloses the gyro flying device, the gyro flying device being connected to the cover (1130) by a retaining mechanism (1140), the gyro flying device comprising:
a gyrorotor (1110) having an axisymmetric structure and rotatable around a central axis thereof; and
a driving mechanism (1120) coaxially mounted with the gyrorotor (1110) to drive the gyrorotor (1110) to rotate around the central axis thereof, thereby manipulating the rise and fall of the navigator (1000), **characterized in that** the retaining mechanism (1140) is further disposed to adjust the inclination angle of the central axis of the gyro to adjust an inclination angle of the gyro flying device, so as to adjust a flying direction of the navigator (1000) ,
and further wherein, when the average rotation linear speed of the gyrorotor (1110) reaches a first cosmic velocity, the centrifugal force generated by the gyrorotor (1110) is equal to its own weight; wherein a.s the rotation speed of the gyrorotor (1110) further increases, the centrifugal force generated by the gyrorotor (1110) is greater than the overall weight of the navigator (1000), thereby causing the navigator (1000) to rise, and wherein, when the rotation speed of the gyrorotor (1110) decreases so that the centrifugal force generated by the gyrorotor (1110) is less than the overall weight of the navigator (1000), the navigator (1000) falls.

2. The navigator (1000) according to claim 1, **characterized in that** the navigator (1000) further comprises a vacuum maintaining system connected to the cover (1130) to maintain an interior of the cover (1130) in a vacuum state.

3. The navigator (1000) according to claim 2, **characterized in that** the retaining mechanism (1140) is connected to the gyro flying device through a bearing (1150).

4. The navigator according to claim 3, **characterized in that** the retaining mechanism (1140) comprises a plurality of telescopic adjustment levers to achieve an adjustment of the inclination angle of the gyro flying device.

5. The navigator (1000) according to claim 4, **characterized in that** the navigator comprises two of the gyro flying devices arranged in upper and lower directions.

6. The navigator (1000) according to claim 4, **characterized in that** the navigator comprises three of the gyro flying devices arranged into an equilateral triangle.

7. The navigator (1000) according to any of claims 1 to 6, **characterized in that** the driving mechanism (1120) is an electric motor.

8. The navigator (1000) according to any of claims 1 to 7, **characterized in that** the gyrorotor (1110) has a cross-section structure with a thickness gradually decreased from a center to an edge.

9. The navigator (1000) according to claim 8, **characterized in that** the gyrorotor (1110) is made of a fiber material mainly composed of carbon.

## Patentansprüche

1. Navigationsgerät (1000), umfassend
ein Kreisel-Fluggerät und eine Abdeckung (1130), die das Kreisel-Fluggerät abdichtet und einschließt, wobei das Kreisel-Fluggerät mit der Abdeckung (1130) durch einen Haltemechanismus (1140) verbunden ist,
wobei das Kreisel-Fluggerät Folgendes umfasst:
einen Kreiselrotor (1110) mit einer achsensymmetrischen Struktur und um eine zentrale Achse davon drehbar; und
einen mit dem Kreiselrotor (1110) koaxial montierten Antriebsmechanismus (1120) zum Antrieb des Kreiselrotors (1110) zur Rotation um die Mittelachse davon, wodurch der Auf- und Abstieg des Navigationsgeräts (1000) manipuliert wird,
**dadurch gekennzeichnet, dass**
der Haltemechanismus (1140) ferner zur Einstellung des Neigungswinkels der Mittelachse des Kreisels angeordnet ist, um einen Neigungswinkel des Kreisel-Fluggeräts einzustellen, so dass eine Flugrichtung des Navigationsgeräts (1000) eingestellt wird,
und wobei ferner, wenn die durchschnittliche lineare Rotationsgeschwindigkeit des Kreiselrotors (1110) eine erste kosmische Geschwindigkeit erreicht, die durch den Kreiselrotor (1110) erzeugte Zentrifugalkraft gleich seinem Eigengewicht ist; wobei wenn die Rotationsgeschwindigkeit des Kreiselrotors (1110) weiter zunimmt, die durch den Kreiselrotor (1110) erzeugte Zentrifugalkraft größer ist als das Gesamtgewicht des Navigationsgeräts (1000), wodurch der Aufstieg des Navigationsgeräts (1000) bewirkt wird, und wobei, wenn die Rotationsgeschwindigkeit des Kreiselrotors (1110) abnimmt, so dass die durch den Kreiselrotor (1110) erzeugte Zentrifugalkraft geringer ist als das Gesamtgewicht des Navigationsgeräts (1000), das Navigationsgerät (1000) absinkt.

2. Navigationsgerät (1000) nach Anspruch 1, **dadurch gekennzeichnet, dass** das Navigationsgerät (1000) ferner ein mit der Abdeckung (1130) verbundenes Vakuumaufrechterhaltungssystem zur Aufrechterhaltung eines Inneren der Abdeckung (1130) in einem Vakuumzustand umfasst.

3. Navigationsgerät (1000) nach Anspruch 2, **dadurch gekennzeichnet, dass** der Haltemechanismus (1140) durch ein Lager (1150)mit dem Kreisel-Fluggerät verbunden ist.

4. Navigationsgerät nach Anspruch 3, **dadurch gekennzeichnet, dass** der Haltemechanismus (1140) eine Vielzahl von teleskopischen Einstellhebeln umfasst, um eine Einstellung des Neigungswinkels des Kreisel-Fluggeräts zu erreichen.

5. Navigationsgerät (1000) nach Anspruch 4, **dadurch gekennzeichnet, dass** das Navigationsgerät zwei der Kreisel-Fluggeräte umfasst, die in oberen und unteren Richtungen angeordnet sind.

6. Navigationsgerät (1000) nach Anspruch 4, **dadurch gekennzeichnet, dass** das Navigationsgerät drei der Kreisel-Fluggeräte umfasst, die in einem gleichseitigen Dreieck angeordnet sind.

7. Navigationsgerät (1000) nach einem der Ansprüche 1 bis 6, **dadurch gekennzeichnet, dass** der Antriebsmechanismus (1120) ein Elektromotor ist.

8. Navigationsgerät (1000) nach einem der Ansprüche 1 bis 7, **dadurch gekennzeichnet, dass** der Kreiselmotor (1110) eine Querschnittsstruktur mit einer von der Mitte zu einem Rand hin allmählich abnehmenden Dicke aufweist.

9. Navigationsgerät (1000) nach Anspruch 8, **dadurch gekennzeichnet, dass** der Kreiselrotor (1110) aus einem hauptsächlich aus Kohlenstoff bestehenden Fasermaterial hergestellt ist.

## Revendications

1. Navigateur (1000), comprenant
un dispositif de vol gyroscopique et un couvercle (1130) qui scelle et entoure le dispositif de vol gyroscopique, le dispositif de vol gyroscopique étant relié au couvercle (1130) par un mécanisme de retenue (1140),
le dispositif de vol gyroscopique comprenant :
un rotor gyroscopique (1110) ayant une structure axisymétrique et pouvant tourner autour d'un axe central de celui-ci ; et
un mécanisme d'entraînement (1120) monté de manière coaxiale avec le rotor gyroscopique (1110) pour entraîner le rotor gyroscopique (1110) en rotation autour de son axe central, manipulant ainsi la montée et la chute du navigateur (1000),
**caractérisé en ce que**
le mécanisme de retenue (1140) est en outre disposé pour régler l'angle d'inclinaison de l'axe central du gyroscope pour régler un angle d'inclinaison du dispositif de vol gyroscopique, de manière à régler une direction de vol du navigateur (1000),
et dans lequel en outre, lorsque la vitesse linéaire de rotation moyenne du rotor gyroscopique (1110) atteint une première vitesse cosmique, la force centrifuge générée par le rotor gyroscopique (1110) est égale à son propre poids ; dans lequel à mesure que la vitesse de rotation du rotor gyroscopique (1110) augmente encore, la force centrifuge générée par le rotor gyroscopique (1110) est supérieure au poids total du navigateur (1000), provoquant ainsi la montée du navigateur (1000), et dans lequel, lorsque la vitesse de rotation du rotor gyroscopique (1110) diminue de sorte que la force centrifuge générée par le rotor gyroscopique (1110) soit inférieure au poids total du navigateur (1000), le navigateur (1000) chute.

2. Navigateur (1000) selon la revendication 1, le navigateur (1000) étant **caractérisé en ce qu'**il comprend en outre un système de maintien du vide relié au couvercle (1130) pour maintenir l'intérieur du couvercle (1130) dans un état sous vide.

3. Navigateur (1000) selon la revendication 2, **caractérisé en ce que** le mécanisme de retenue (1140) est relié au dispositif de vol gyroscopique par un palier (1150).

4. Navigateur selon la revendication 3, **caractérisé en ce que** le mécanisme de retenue (1140) comprend une pluralité de leviers de réglage télescopique pour réaliser un réglage de l'angle d'inclinaison du dispositif de vol gyroscopique.

5. Navigateur (1000) selon la revendication 4, le navigateur étant **caractérisé en ce qu'**il comprend deux des dispositifs de vol gyroscopique agencés dans des directions supérieure et inférieure.

6. Navigateur (1000) selon la revendication 4, le navigateur étant **caractérisé en ce qu'**il comprend trois des dispositifs de vol gyroscopique agencés en triangle équilatéral.

7. Navigateur (1000) selon l'une des revendications 1 à 6, **caractérisé en ce que** le mécanisme d'entraînement (1120) est un moteur électrique.

8. Navigateur (1000) selon l'une des revendications 1 à 7, **caractérisé en ce que** le rotor gyroscopique (1110) a une structure de section transversale ayant une épaisseur qui diminue progressivement depuis un centre vers un bord.

9. Navigateur (1000) selon la revendication 8, **caractérisé en ce que** le rotor gyroscopique (1110) est réalisé en un matériau fibreux principalement composé de carbone.
